# EUROPEAN PATENT APPLICATION

(11) **EP 4 528 618 A1**
(43) Date of publication of application: **26.03.2025**
(21) Application number: 24202001.4
(22) Date of filing: 23.09.2024
(51) Int. Cl.: G06Q 10/20, B60P 3/32, G06Q 50/40, H04W 4/40

(54) **RECREATIONAL VEHICLE ASSET MANAGEMENT**

(30) Priority: 22.09.2023 US 202363584746 P; 21.09.2024 US 202418892355
(71) Applicant: Thor Tech, Inc., Elkhart, IN 46514 (US)
(72) Inventor: Cook, Chris, 46514 Elkhart (US); Pendl, Chris, 46514 Elkhart (US)
(74) Representative: Müller Schupfner & Partner Patent- und Rechtsanwaltspartnerschaft mbB (Muc)

(57) **Abstract**

Embodiments for recreational vehicle asset management are provided. One embodiment of method includes registering a first asset and a second asset, monitoring usage of the first asset and the second asset during a trip of predetermined duration, and predicting, based on the usage that the first asset is likely to experience a status change. Some embodiments include determining a likely time that the first asset is likely to experience the status change, determining, based on the likely time that the first asset is likely to experience the status change whether the first asset will likely experience the status change during the trip and in response to determining that the first asset will likely experience the status change during the trip, altering operation of a recreational vehicle to address the status change.

## Description

### CROSS REFERENCE

This application claims the benefit of U.S. Application Serial Number 63/584,746, filed on September 22, 2023, and U.S. Application Serial No. 18/892,355, filed on September 21, 2024, which are hereby incorporated by reference in their entirety.

### BACKGROUND

Recreational vehicles (RVs) are becoming more popular with the general public and, as a consequence, are becoming more sophisticated. RVs now have multiple systems to create a more pleasurable traveling experience, both for the drive and while camping. As an example, many RVs now have full kitchens, with microwaves, running water, water heaters, and/or dishwashers. Additionally, many RVs now have wastewater containment, computing and networking, as well as navigation.

While the increase in such systems has proven a draw for many RV owners, the increased number and complexity of these systems can cause problems for the user, when introducing a new system, when managing a system, as well as when a system malfunctions. As such, a need exists in the industry for recreational vehicle asset management.

### SUMMARY

Embodiments for recreational vehicle asset management are provided. One embodiment of method includes registering a first asset and a second asset, monitoring usage of the first asset and the second asset during a trip of predetermined duration, and predicting, based on the usage that the first asset is likely to experience a status change. Some embodiments include determining a likely time that the first asset is likely to experience the status change, determining, based on the likely time that the first asset is likely to experience the status change whether the first asset will likely experience the status change during the trip and in response to determining that the first asset will likely experience the status change during the trip, altering operation of a recreational vehicle to address the status change.

Embodiments of a system include a recreational vehicle that comprises a first asset and a second asset and a computing device that comprises a processor and a memory component. The memory component may store logic that, when executed by the processor, causes the system to monitor usage of the first asset and the second asset during a trip of predetermined duration, predict, based on the usage that the first asset is likely to malfunction, and determine a likely time that the first asset is likely to malfunction. Some embodiments cause the system to determine, based on the likely time that the first asset is likely to malfunction whether the first asset will likely malfunction to disrupt the trip and in response to determining that the first asset will likely malfunction to disrupt the trip, alter operation of the recreational vehicle to address the malfunction.

A non-transitory computer-readable storage medium for recreational vehicle asset management. Some embodiments include logic that, when executed by a computing device, causes the computing device to monitor usage of a first asset and a second asset in a recreational vehicle during a trip of predetermined duration, predict, based on the usage that the first asset is likely to malfunction, and determine a likely time that the first asset is likely to malfunction. Some embodiment cause the computing device to determine, based on the likely time that the first asset is likely to malfunction whether the first asset will likely malfunction to disrupt the trip and in response to determining that the first asset will likely malfunction to disrupt the trip, alter operation of the recreational vehicle to address the malfunction.

### BRIEF DESCRIPTION

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, there is no intent to limit the disclosure to the embodiment or embodiments disclosed herein. On the contrary, the intent is to cover all alternatives, modifications, and equivalents.
FIG. 1 depicts a computing environment for recreational vehicle asset management, according to embodiments provided herein;
FIG. 2 depicts a user interface for detecting a new asset, according to embodiments provided herein;
FIG. 3 depicts a user interface for updating status of an asset, according to embodiments provided herein;
FIG. 4 depicts a user interface for detecting an asset malfunction, according to embodiments provided herein;
FIG. 5 depicts a flowchart for detecting a new asset, according to embodiments provided herein;
FIG. 6 depicts a flowchart for updating status of an asset, according to embodiments provided herein;
FIG. 7 depicts a flowchart for detecting an asset malfunction, according to embodiments provided herein;
FIG. 8 depicts a flowchart for altering operation of an asset, according to embodiments provided herein; and
FIG. 9 depicts a computing device for recreational asset management, according to embodiments provided herein.

### DETAILED DESCRIPTION

Embodiments disclosed herein include a system and/or method for recreational vehicle asset management. Specifically, embodiments provided herein are directed to the identification, maintenance, and troubleshooting of assets within a recreational vehicle (RV). Some embodiments may link a user and an RV with a mobile application. The mobile application may be configured to determine (such as via user input, default settings due to RV model, and/or via detection) one or more assets in the RV. Assets may include appliances, such as water heaters, stoves, dishwashers, microwaves, etc., convenience systems, such as freshwater systems, gray water systems, black water systems, electrical systems, etc., and/or operational systems, such as computing infrastructure, positioning systems, driver assistance/self-driving systems, etc. Regarding the identification of assets, some embodiments may be configured to detect the presence of one or more of the assets. While some embodiments may identify the assets, some embodiments may rely on a user and/or administrator identifying the asset, asset type, model, age, etc. Some embodiments of the mobile application may permit a user and/or administrator to input the assets such that detection and identification are performed by the user/administrator.

Embodiments provided herein also include asset management. After registering the assets, embodiments may be configured to determine and manage utilization of one or more of those assets. As an example, the freshwater system may hold 100 gallons of freshwater. Embodiments may monitor daily usage of the freshwater and communicate that usage to the mobile application. Some embodiments may determine a length of a trip, as well as a projected time until all of the freshwater is consumed. These embodiments may then make recommendations based on whether there is enough water to complete the trip. If not, water conservation and/or replenishment recommendations may be provided.

Some embodiments include asset maintenance. Specifically, some embodiments may be configured to determine malfunctions and/or markers of future malfunctions. As an example, a water heater may begin varying temperature beyond a predetermined threshold. Based on this erratic behavior, these embodiments may determine that the water heater will likely malfunction within a predetermined amount of time and/or usage. Based on this determination, these embodiment may alter operation of the water heater (such as turning off at night) and/or may provide communications to the mobile application with recommendations on how to maintain operation of the water heater until the trip is complete.

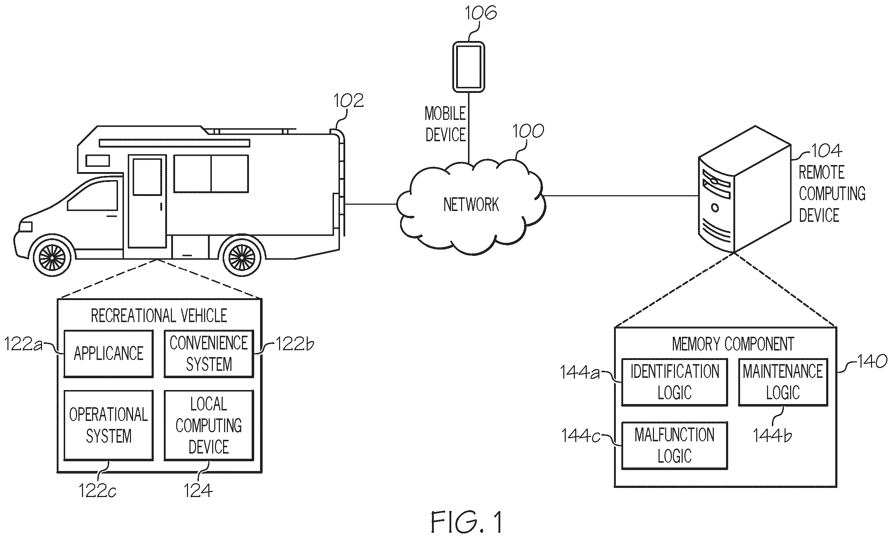

Referring now to the drawings, FIG. 1 depicts a computing environment for recreational vehicle asset management, according to embodiments provided herein. As illustrated, the computing environment includes a network 100 that couples an RV 102 with a remote computing device 104 and a mobile device 106. The network 100 may be configured as any wide area network (WAN), such as the internet, cellular network, public switch telephone network (PSTN), satellite network, etc.; local area network (LAN), such as Ethernet, wireless-fidelity (Wi-Fi), etc.; and/or any personal area network (PAN), such as Zigbee^{™}, Bluetooth^{™}, etc.

The RV 102 may include any recreational vehicle, such as travel trailers, fifth wheels, lightweight RVs, toy haulers, motorized RVs, etc. As such, the RV 102 may be configured with an appliance 122a, a convenience system 122b, an operational system 122c, and a local computing device 124. It will be understood that the appliance 122a represents one or more appliances, such as a water heater, stove, dishwasher, microwave, etc. Similarly, the convenience system 122b may represent one or more convenience systems, such as freshwater systems, gray water systems, black water systems, electrical systems, lighting systems, etc. Operational system 122c may represent one or more operational systems, such as computing infrastructure, positioning systems, driver assistance/self-driving systems, etc. The local computing device 124 may represent any integrated and/or removable computing device for facilitating operation of the assets and providing other functionality provided herein.

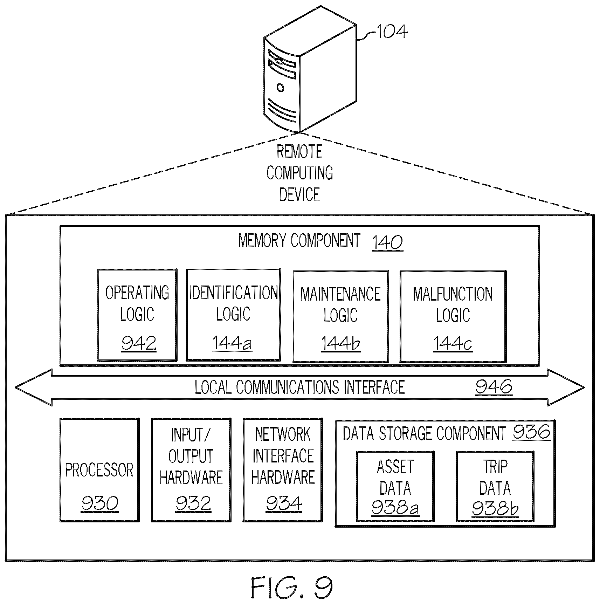

The remote computing device 104 may represent any general purpose or special purpose server, personal computer, laptop, tablet, and/or other computing device for providing the functionality provided herein. As such, the remote computing device 104 may include hardware and software as provided with reference to FIG. 9, such as a memory component 140, which stores identification logic 144a, maintenance logic 144b, and malfunction logic 144c. The identification logic 144a may cause the remote computing device 104 and/or local computing device 124 to identify a new asset in the RV 102, as described in more detail below. The maintenance logic 144b may cause the remote computing device 104 and/or the local computing device 124 to maintain one or more assets in the RV 102. The malfunction logic 144c may cause the remote computing device 104 and/or the local computing device 124 to provide asset malfunction options, as also described in more detail below.

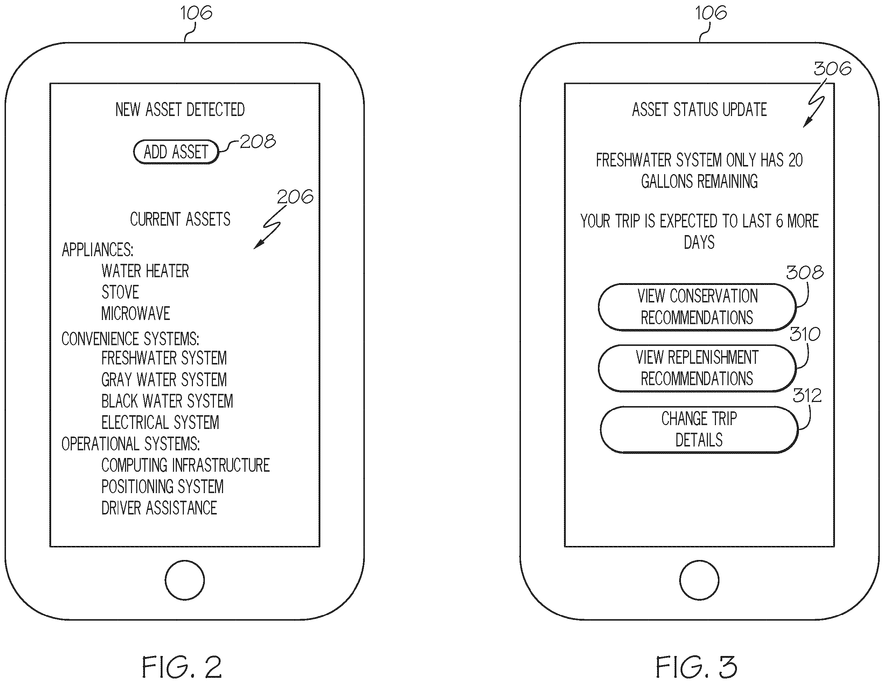

The mobile device 106 is also coupled to the network 100. The mobile device 106 may be configured as any general purpose or special purpose computing device that may be moved from a first location to a second location while maintaining functionality. The mobile device 106 may be configured to provide one or more of the user interfaces described with reference to FIGS. 2-4.

It should be noted that the term "coupled to" as referred to herein may include being physically coupled, electrically coupled, and/or communicatively coupled. As an example, an appliance 122a may be physically coupled to a RV 102, such that the appliance 122a is integral to the RV 102 or removably place in the RV 102. In such an embodiment, the appliance 122a may also be electrically coupled to the RV 102 such that power is provided from the RV 102 to the appliance 122a. Similarly, the appliance 122a may be communicatively coupled to the RV 102 in that the RV 102 may communicate with the appliance 122a to receive and/or provide data.

FIG. 2 depicts a user interface 206 for detecting a new asset, according to embodiments provided herein. When a user first acquires the RV 102, a registration process may take place to associate the RV 102 and/or the assets in the RV 102 with an account of the user. In the registration process, an inventory of the assets may be taken, with such information as make, model, age, usage, etc. to efficiently determine a problem with the asset and take corrective action.

Sometimes, a user may need to replace an old asset with a new asset or simply add a new asset to the RV 102. Regardless, when a user installs a new asset, such as an appliance 122a, convenience system 122b, and/or operational system 122c, the local computing device 124 may detect the new installation. Depending on the particular embodiment, this detection may be the result of the new asset being coupled to a local network in the RV 102, the result of an radio frequency identifier (RFID) on the asset that communicates with the local computing device 124 and/or mobile device 106, a QR code, a bar code, and/or as a result of input from a user of the mobile device 106 and/or local computing device 124. Regardless and as illustrated in FIG. 2, the mobile device 106 may provide the user interface 206. The user interface 206 may include a listing of one or more of the assets currently registered with the RV 102, as well as an add asset option 208, to add the newly detected asset to the registry. Although a "recreational vehicle" may take a variety of forms, in its broadest sense, a "recreational" vehicle will comprise a vehicle body enclosing a living quarters equipped with, for example, a sleeping area, a dining area, a food storage area, a food preparation area, personal care areas, or combinations thereof.

It should be noted that the assets in the registry of FIG. 2 are coupled to the local computing device 124 and/or mobile device 106, such that the assets may be monitored. As discussed above, the coupling of assets may be embodied as a network connection or other mechanism for communicating data between the assets and the remote computing device 104, the mobile device 106, and/or the local computing device 124. Specifically, some embodiments may utilize a wired connection between the asset and the local computing device 124 to acquire data from the assets; format that data; and send the formatted data to the remote computing device 104 for processing. Some embodiments however, utilize a wireless communication between the assets and the local computing device 124, the mobile device 106, and/or the remote computing device 104 for processing asset data.

It should also be noted that in addition to adding the asset to the registry, embodiments may be configured to acquire information about the assets on the registry. Such information may include asset type, brand, model, age, electrical requirements, operating parameters, error codes, user manuals, usage, and/or other data that may be used to determine useful life, proper function, malfunction of the asset, and troubleshooting, as described in more detail below.

FIG. 3 depicts a user interface 306 for updating status of an asset, according to embodiments provided herein. While FIG. 2 depicts a user interface 206 that may be provided for the detection and registry of a new asset, FIG. 3 is provided for maintaining previously registered assets. As illustrated, the mobile device 106 may provide the user interface 306, which may indicate a status update for an asset. In the example of FIG. 3, the status update may include a freshwater system dropping below a predetermined level.

In some embodiments, the status update may also compare the status of the asset with data related to a trip that the user is taking or going to take. Specifically, some embodiments may be configured to determine data related to a trip, such as duration, stops, final destination, distance traveled, outside temperature, weather, time parked, etc. This information may then be utilized to determine whether the status change of an asset is potentially detrimental to that trip. As an example, the freshwater system only has 20 gallons remaining, but the trip will end in the next 2 hours, some embodiments may not provide a notification to the user (or may provide a less alarming notification).

However, if as illustrated in FIG. 3, the trip has 6 days left, so the asset status update may detrimentally affect the trip, the user interface 306 may also provide a view conservation recommendations option 308, a view replenishment recommendations option 310, and a change trip details option 312. In response to selecting the view conservation recommendations option 308, embodiments may provide tips and/or tricks for causing the remaining freshwater to last longer. In response to selection of the view replenishment recommendations option 310, embodiments may provide one or more waypoints where the user may take the RV 102 to replenish the freshwater system. In response to selection of the change trip details option 312, embodiments may provide one or more additional options for changing trip details manually.

It should be understood that while the user interface 306 refers to a freshwater system, other assets with limited resources may also be monitored for status update, each with slightly different options. As an example, if the electrical system only has a low level of charge remaining, this may be provided in a similar user interface 306 is provided in FIG. 3. However, in this example, the local computing device 124 and/or the remote computing device 104 may determine how much electrical is used turning travel, as well as during camping. Based on the distance expected to be traveled and the time expected to be camping, the local computing device 124 and/or the remote computing device 104 may determine whether the current battery level is sufficient within a predetermined margin. If so, no action need be taken.

If a determination is made that the current amount of energy in storage is not likely enough to complete the trip, a determination may be made regarding energy conservation steps that could extend the predicted time for the energy to be depleted. The recommended conservations steps may be steps that the user may manually take and/or steps that the system may apply. As an example, one recommendation may be to turn the air conditioning up to 78 degrees between the hours of 9:00 AM and 8:00 PM during camping. This may be a setting that is automatically applied by the local computing device 124. Other examples may include automatically restricting the maximum temperature of a hot water heater, providing alarms or restricting shower time to a maximum, automatically restricting use of a dishwasher, stove, etc.

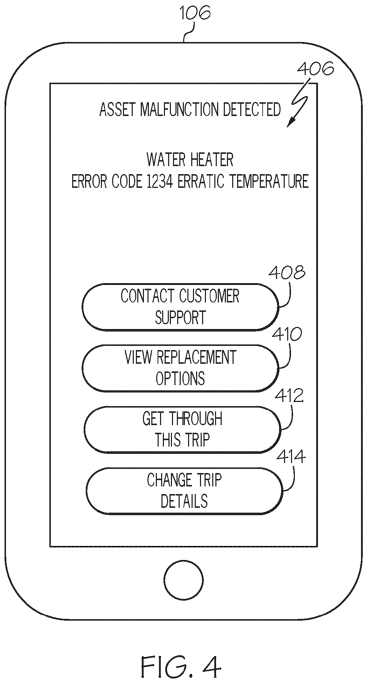

FIG. 4 depicts a user interface 406 for detecting an asset malfunction, according to embodiments provided herein. While the user interface 306 from FIG. 3 provides information regarding a change in status of an asset, FIG. 4 provides a user interface 406 in the event of asset malfunction. In some embodiments, malfunction detection may include receiving an error code or warning code from the asset itself, and/or monitoring of the operation of the assets by the local computing device 124 (or other computing device) to determine patterns that might suggest an error future error.

The user interface 406 provides an indication that the water heater has not been able to hold a temperature at times. Thus, the local computing device 124 may determine that, while this might not be a problem right now, such an issue may result in a total failure of the water heater in the next 5 days. As such, the user interface 406 may provide a customer support option 408, a view replacement options option 410, a "get through this trip" option 412, and a "change trip details" option 414.

In response to a user selection of the customer support option 408, the user may be placed in contact with a customer service representative. In response to selection of the view replacement options option 410, the user may be provided with dealers that carry the water heater and/or replacement parts that may also be within a reasonable distance from the RV 102 and/or a waypoint on the current trip. In some embodiments, a repair specialist may be called to meet the RV 102 along the trip to repair and/or replace the asset. In response to selection of the get through this trip option 412, the user may be provided with one or more recommendations that will statistically improve the expected lifespan of the asset. As an example, the local computing device 124 and/or the remote computing device 104 may determine that, based on the data received from the asset, a time for a likely failure, a component that will likely fail, as well as strategies for extending the life (if even for just a few days).

As an example, a determination may be made that a water heater could fail in the next two days. By analyzing the data from the asset (such as error codes, warning codes, temperature readings, temperature settings, etc.) that the heating element is likely going to be the point of failure. With this knowledge, the local computing device 124 and/or remote computing device 104 may determine that to extend the life of the heating element, the temperature setting should not exceed 95 degrees. Depending on the example, a notification may be provided to the user and the setting may automatically be applied. If the length of the trip is determined to be shorter, it is possible that the temperature setting may be maintained at 100 degrees or lower.

If, in this example, the determination is that the thermostat is the likely point of failure, it may be determined that to extend the life of the water heater for the current trip, the water heater should be turned off when not in use. While some embodiments may recommend turning off the water heater, some embodiments may be configured to determine times the water heater will need to be used and automatically set a schedule for turning the water heater on and off.

It should also be understood that some embodiments may utilize a holistic approach to diagnosing and addressing potential asset failure. Some embodiments may be configured to analyze the entire asset suite in determining an issue for an individual asset. One example would be if the water heater is not heating the water to the set temperature. If only analyzing data received from the water heater, a determination may be made that the heating element is failing. However, if looking at the entire suite of assets in the RV 102 as a single system, embodiments provided herein may determine that the electrical system is not providing the water heater with the desired power to heat the water. As such, these embodiments may correctly identify that the electrical system has the error and provide an appropriate response for correcting the issue and/or for increasing the likelihood that the RV will function through the duration of the trip.

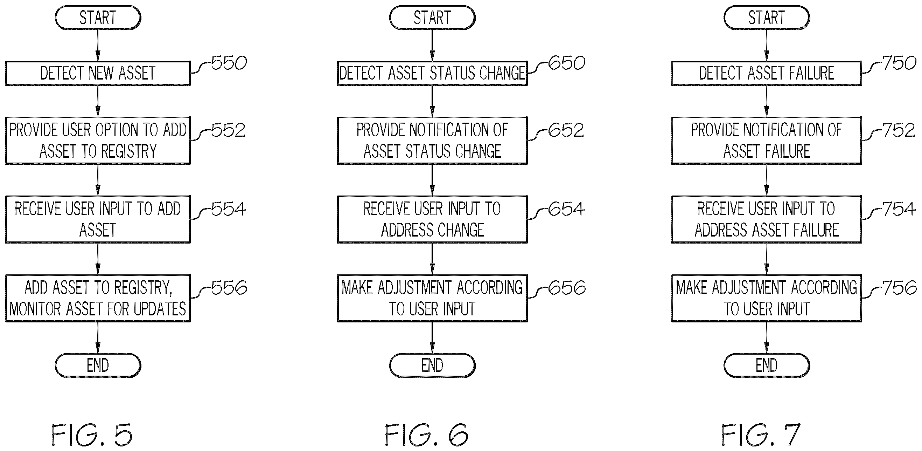

FIG. 5 depicts a flowchart for detecting a new asset, according to embodiments provided herein. As illustrated in block 550, a new asset may be detected. As described above, this detection may be via user input, via a network communication, and/or via an external communication. In block 552, a user option to add the asset to the registry may be provided. In block 554, user input may be received to add the asset to the registry. In block 556, the asset may be added to the registry and the asset may be monitored for updates.

In some embodiments, the remote computing device 104 may store data related to compatible assets that may be added to the RV 102. Compatibility may be determined based on the make and/or model of the RV 102 and/or based on the current assets in the RV 102. As an example, if the electrical system is Acme brand, but the user is looking to purchase a AAA brand water heater, the remote computing device 104 may determine whether the AAA branded water heater is compatible. If the new asset is compatible, embodiments may be able to associate data from the new asset with the user account to monitor usage and predict potential malfunction, as described herein.

If the new asset not compatible, notification may be provided to the user and/or a recommendation for a compatible water heater may be provided. In some embodiments, the remote computing device 104 may be configured to provide an interface of compatible water heaters, based on a user selection and/or a determination that the asset needs replacing. In some embodiments, if the desired asset is not compatible, embodiments may determine a reason why the new asset is not compatible and determine other assets that will need to be included in the RV 102 to make the new asset compatible. As an example, if the reason the water heater is not compatible is because the proposed water heater draws too much power for the current electrical system, embodiments may determine that the electrical system needs updating and will recommend additions to the electrical system and/or a replacement for the electrical system.

Similarly, some embodiments, may be configured to determine a user-defined parameter that may be violated by addition of a new asset. The new asset may be technically compatible with the RV 102, but by adding the new asset, the RV 102 may fail to provide a user-defined parameter. As an example, a user (and/or administrator) may determine that the RV 102 should have at least enough electricity, fresh water storage, gray water storage, and/or black water storage for five days of camping. In searching for a new water heater, the user may select the AAA water heater. Embodiments may determine that by adding the AAA water heater, the RV system will no longer be able to provide enough electricity for five days of camping. This notification may be provided to the user and the user may be provided an option to install the AAA water heater, despite this user-defined parameter violation. If the user does not want to violate the user-defined parameter, embodiments may determine and provide a comparable water heater that would not violate the user-defined parameter.

FIG. 6 depicts a flowchart for updating status of an asset, according to embodiments provided herein. As illustrated in block 650, an asset status change may be detected. The status change may be a predetermined status change that does not represent a malfunction, but normal operation of a limited supply asset where the supply may be low. This may include electricity in a battery, water in a fresh water tank, and/or capacity in a graywater or black water tank. As will be understood, the asset status change may be that the freshwater tank is empty, below a predetermined threshold volume, and/or below a predetermined amount of time left (using a predicted usage rate). In block 652, once the status change has been determined, a notification of the asset status change may be provided to the user. The notification may include an alert on the mobile device 106. The notification may also include one or more options for addressing the status change.

As discussed above, some embodiments may be configured to provide recommendations and/or may automatically address the issue. Specifically, if it is determined that the graywater tank only has capacity for one more day, embodiments may alert the user and/or may automatically (or in response to a user selection) limit the freshwater that is provided to certain areas of the RV 102 that will be captured by the graywater tank (such as the kitchen sink). In block 654, user input may be received to address the status change. As discussed above, this may include viewing conservation and/or replenishment options. As an example, if the user desires to find the nearest disposal facility instead of limiting usage of water, an option to route the RV 102 to a disposal facility may be provided. In block 656, an adjustment may be made according to the user input.

FIG. 7 depicts a flowchart for detecting an asset status change in the form of a malfunction, according to embodiments provided herein. As illustrated in block 750, an asset failure and/or a potential asset failure may be detected. As described above, the asset failure may or may not be occurring presently, but (if not presently occurring) may likely occur in the future. As such, embodiments may be configured to determine the likely lifespan of the asset before the malfunction occurs; determine a component that is likely the cause of the potential malfunction; and a solution for addressing the component. As described above, the component that is determined to be the issue may or may not be part of the potentially malfunctioning asset. Specifically, if a lighting system is not operating properly, embodiments may determine that the component that is malfunction lies in the electrical system, not necessarily in the lighting system. In block 752, notification of the potential asset failure may be provided to a user. The notification may include the asset and/or component that is the likely culprit of the potential malfunction, the time expected before the malfunction makes the asset and/or other assets unable to operate properly, and options to ignore, mitigate, or address the problem. As described above, an option to mitigate the problem may include options to alter usage of the asset and/or other assets to extend the life of the asset. The option may be a recommended action that the user can take and/or may be an adjustment of a system setting that will ensure compliance with the recommended action. In block 764, user input may be received to address the potential asset failure via one or more of the options. In block 756, an adjustment may be made according to the user input.

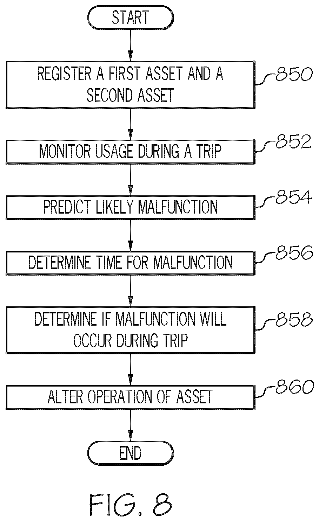

FIG. 8 depicts a flowchart for altering operation of an asset, according to embodiments provided herein. As illustrated in block 850, embodiments may register a first asset and a second asset in an RV 102. As described above, the assets may include an appliance, a convenience system, and/or and operational system. As also described above, registration of the assets may be initiated due to a purchase of the RV, a replacement of a current asset, and/or a purchase of a new asset. In block 852, usage of the first asset and the second asset may be monitored during a trip of predetermined duration. While the assets may be monitored during the trip, this trip data may be compared with data associated with the first asset and/or second asset during previous trips and/or other assets that fit the data profile of the first asset and/or second asset. In block 854, a likely malfunction may be predicted from the monitoring. The malfunction prediction may be performed based on the data profile. As described above, the malfunction prediction may determine which component is the cause of the likely malfunction. In some embodiments, the problematic component may be a component on the asset that is likely to malfunction, while some embodiments may determine that the component causing the issue is on another asset (e.g., the second asset).

In block 856, a determination may be made regarding a likely time for the malfunction. As an example, if the first asset is a water heater and the temperature of the water is varying by two degrees on Tuesday, three degrees on Wednesday, and four degrees on Thursday, embodiments may identify this change is temperature variance to determine when the variance will cause a malfunction. In block 858, a determination may be made regarding whether the likely malfunction will occur during the trip and/or whether the malfunction will disrupt the trip. Specifically, if the component is determined to be the exterior lighting of the RV, but the malfunction is likely to occur after camping is complete (but during the drive back), embodiments may determine that even though the malfunction is likely to occur during the trip, the malfunction will not affect or disrupt the trip. In response to determining that the malfunction will occur during the trip or otherwise disrupt the trip, operation of the RV 102 and/or assets may be altered to address the potential malfunction.

FIG. 9 depicts a remote computing device 104 for recreational asset management, according to embodiments provided herein. As illustrated, the remote computing device 104 includes a processor 930, input/output hardware 932, network interface hardware 934, a data storage component 936 (which stores asset data 938a, trip data 938b, and/or other data), and the memory component 140. The memory component 140 may be configured as volatile and/or nonvolatile memory and as such, may include random access memory (including SRAM, DRAM, and/or other types of RAM), flash memory, secure digital (SD) memory, registers, compact discs (CD), digital versatile discs (DVD), and/or other types of non-transitory computer-readable mediums. Depending on the particular embodiment, these non-transitory computer-readable mediums may reside within the remote computing device 104 and/or external to the remote computing device 104.

The memory component 140 may store operating logic 942, the identification logic 144a, the maintenance logic, and the malfunction logic 144c. The identification logic 144a, the maintenance logic 144b, and the malfunction logic 144c may each include a plurality of different pieces of logic, each of which may be embodied as a computer program, firmware, and/or hardware, as an example. A local interface 946 is also included in FIG. 9 and may be implemented as a bus or other communication interface to facilitate communication among the components of the remote computing device 104.

The processor 930 may include any processing component operable to receive and execute instructions (such as from a data storage component 936 and/or the memory component 140). The input/output hardware 932 may include and/or be configured to interface with microphones, speakers, a display, and/or other hardware.

The network interface hardware 934 may include and/or be configured for communicating with any wired or wireless networking hardware, including an antenna, a modem, LAN port, wireless fidelity (Wi-Fi) card, WiMax card, ZigBee card, Bluetooth chip, USB card, mobile communications hardware, and/or other hardware for communicating with other networks and/or devices. From this connection, communication may be facilitated between the remote computing device 104 and other computing devices, such as the mobile device 106 and/or the local computing device 124.

The operating logic 942 may include an operating system and/or other software for managing components of the remote computing device 104. As also discussed above, the identification logic 144a, the maintenance logic 144b, and the malfunction logic 144c may reside in the memory component 140 and may be configured to perform the functionality, as described herein.

It should be understood that while the components in FIG. 9 are illustrated as residing within the remote computing device 104, this is merely an example, as some embodiments may be configured with the local computing device 124 and/or the mobile device 106 with this hardware and/or software infrastructure to provide the described functionality. It should also be understood that, while the remote computing device 104 is illustrated as a single device, this is also merely an example. In some embodiments, the identification logic 144a, the maintenance logic 144b, and the malfunction logic 144c may reside on different computing devices. As an example, one or more of the functionalities and/or components described herein may be provided by the local computing device 124 and/or mobile device 106.

Additionally, while the remote computing device 104 is illustrated with the identification logic 144a, the maintenance logic 144b, and the malfunction logic 144c as separate logical components, this is also an example. In some embodiments, a single piece of logic (and/or or several linked modules) may cause the remote computing device 104 to provide the described functionality.

Embodiments provided herein include systems and methods for recreational vehicle asset management. As such, these embodiments improve the technical field of predicting electronic assets malfunction by providing new hardware and/or software for improving the registration, maintenance, and troubleshooting of RV assets, which is unique to the RV industry. As an example, by predicting timing of failure of an asset and a recommended step to prolong the life of the asset through the end of the trip, the field of RV travel is improved. Further, these systems and methods cannot be performed by a human with pen and paper because predicting a likely error in an asset includes sensor and electrical communication with the asset that would not be possible to be performed by a human.

Accordingly, embodiments provided herein may include one or more of the following aspects:

A first aspect includes a system for recreational vehicle asset management comprising: a recreational vehicle that comprises a first asset and a second asset; and a computing device that comprises a processor and a memory component that stores logic that, when executed by the processor, causes the system to perform at least the following: monitor usage of the first asset and the second asset during a trip of predetermined duration; predict, based on the usage that the first asset is likely to malfunction; determine a likely time that the first asset is likely to malfunction; determine, based on the likely time that the first asset is likely to malfunction whether the first asset will likely malfunction to disrupt the trip; and in response to determining that the first asset will likely malfunction to disrupt the trip, alter operation of the recreational vehicle to address the malfunction.

A second aspect includes the first aspect, wherein addressing the malfunction comprises automatically adjusting a setting on the first asset to extend a time until the likely malfunction.

A third aspect includes the first aspect and/or the second aspect, wherein the logic further causes the system to determine that the likely malfunction is caused by an issue with the second asset.

A fourth aspect includes any of the first aspect through the third aspect, wherein the logic further causes the system to register the first asset, wherein registering the first asset comprises determining if the first asset is compatible with the recreational vehicle.

A fifth aspect includes any of the first aspect through the fourth aspect, wherein the logic further causes the system to determine, in response to determining that the first asset is not compatible, a reason why the first asset is not compatible; and determining other assets that will need to be included in the recreational vehicle to make the first asset compatible.

A sixth aspect includes any of the first aspect through the fifth aspect, wherein determining whether the first asset is compatible comprises determining whether adding the first asset to the recreational vehicle will violate a user-defined parameter and in response to determining that adding the first asset to the recreational vehicle will violate the user-defined parameter, providing an option to perform at least one of the following: adjust the user-defined parameter, accept that the first asset will violate the user-defined parameter, or locate a different asset that will not violate the user-defined parameter.

A seventh aspect includes any of the first aspect through the sixth aspect, wherein the computing device comprises at least one of the following: a recreational vehicle computing device, a remote computing device, or a mobile device.

An eighth aspect includes any of the first aspect through the seventh aspect, wherein the first asset is a water heater and the second asset is an electrical system, wherein altering operation of the recreational vehicle comprises limiting a time that the water heater is powered.

A ninth aspect includes a method for recreational vehicle asset management comprising: registering, by a computing device, a first asset and a second asset; monitoring, by the computing device, usage of the first asset and the second asset during a trip of predetermined duration; predicting, by the computing device, based on the usage that the first asset is likely to experience a status change; determining, by the computing device, a likely time that the first asset is likely to experience the status change; determining, by the computing device, based on the likely time that the first asset is likely to experience the status change, whether the first asset will likely to experience the status change during the trip; and in response to determining that the first asset will likely experience the status change during the trip, altering, by the computing device, operation of a recreational vehicle to address the status change.

A tenth aspect includes the ninth aspect, wherein addressing the status change comprises automatically adjusting a setting on the first asset to extend a time until the likely status change.

An eleventh aspect includes the ninth aspect and/or the tenth aspect, further comprising determining that the likely status change is caused by an issue with the second asset.

A twelfth aspect includes any of the ninth aspect through the eleventh aspect, wherein registering the first asset comprises determining if the first asset is compatible with the recreational vehicle.

A thirteenth aspect includes any of the ninth aspect through the twelfth aspect, further comprising, in response to determining that the first asset is not compatible, determining a reason why the first asset is not compatible; and determining other assets that will need to be included in the recreational vehicle to make the first asset compatible.

A fourteenth aspect includes any of the ninth aspect through the thirteenth aspect, wherein determining whether the first asset is compatible comprises determining whether adding the first asset to the recreational vehicle will violate a user-defined parameter and in response to determining that adding the first asset to the recreational vehicle will violate the user-defined parameter, providing an option to perform at least one of the following: adjust the user-defined parameter, accept that the first asset will violate the user-defined parameter, or locate a different asset that will not violate the user-defined parameter.

A fifteenth aspect includes a non-transitory computer-readable storage medium for recreational vehicle asset management that comprises logic that, when executed by a computing device, causes the computing device to perform at least the following: monitor usage of a first asset and a second asset in a recreational vehicle during a trip of predetermined duration; predict, based on the usage that the first asset is likely to malfunction; determine a likely time that the first asset is likely to malfunction; determine, based on the likely time that the first asset is likely to malfunction whether the first asset will likely malfunction to disrupt the trip; and in response to determining that the first asset will likely malfunction to disrupt the trip, alter operation of the recreational vehicle to address the malfunction.

A sixteenth aspect includes the fifteenth aspect, wherein addressing the malfunction comprises automatically adjusting a setting on the first asset to extend a time until the likely malfunction.

A seventeenth aspect includes the fifteenth aspect and/or the sixteenth aspect, wherein the logic further causes the computing device to determine that the likely malfunction is caused by an issue with the second asset.

An eighteenth aspect includes any of the fifteenth aspect through the seventeenth aspect, wherein the logic further causes the computing device to register the first asset, wherein registering the first asset comprises determining if the first asset is compatible with the recreational vehicle.

A nineteenth aspect includes any of the fifteenth aspect through the eighteenth aspect, wherein the logic further causes the computing device to determine, in response to determining that the first asset is not compatible, a reason why the first asset is not compatible; and determining other assets that will need to be included in the recreational vehicle to make the first asset compatible.

A twentieth aspect includes any of the fifteenth aspect through the nineteenth aspect, wherein determining whether the first asset is compatible comprises determining whether adding the first asset to the recreational vehicle will violate a user-defined parameter and in response to determining that adding the first asset to the recreational vehicle will violate the user-defined parameter, providing an option to perform at least one of the following: adjust the user-defined parameter, accept that the first asset will violate the user-defined parameter, or locate a different asset that will not violate the user-defined parameter.

One should note that the flowcharts included herein show the architecture, functionality, and operation of a possible implementation of software. In this regard, each block can be interpreted to represent a module, segment, or portion of code, which comprises one or more executable instructions for implementing the specified logical function(s). It should also be noted that in some alternative implementations, the functions noted in the blocks may occur out of the order and/or not at all. For example, two blocks shown in succession may in fact be executed substantially concurrently or the blocks may sometimes be executed in the reverse order, depending upon the functionality involved.

It should be emphasized that the above-described embodiments are merely possible examples of implementations, merely set forth for a clear understanding of the principles of this disclosure. Many variations and modifications may be made to the above-described embodiment(s) without departing substantially from the spirit and principles of the disclosure. Further, the scope of the present disclosure is intended to cover all permutations and sub-permutations of all elements, features, and aspects discussed above. All such modifications and variations are intended to be included herein within the scope of this disclosure.

## Claims

1. A system for recreational vehicle asset management comprising:
a recreational vehicle that comprises a first asset and a second asset; and
a computing device that comprises a processor and a memory component that stores logic that, when executed by the processor, causes the system to perform at least the following:
monitor usage of the first asset and the second asset during a trip of predetermined duration;
predict, based on the usage that the first asset is likely to malfunction;
determine a likely time that the first asset is likely to malfunction;
determine, based on the likely time that the first asset is likely to malfunction whether the first asset will likely malfunction to disrupt the trip; and
in response to determining that the first asset will likely malfunction to disrupt the trip, alter operation of the recreational vehicle to address the malfunction.

2. The system of claim 1, wherein addressing the malfunction comprises automatically adjusting a setting on the first asset to extend a time until the likely malfunction.

3. The system of claim 1 or 2, wherein the logic further causes the system to determine that the likely malfunction is caused by an issue with the second asset.

4. The system of any one of the preceding claims, wherein the logic further causes the system to register the first asset, wherein registering the first asset comprises determining if the first asset is compatible with the recreational vehicle.

5. The system of any one of the preceding claims, wherein the logic further causes the system to determine, in response to determining that the first asset is not compatible, a reason why the first asset is not compatible; and determining other assets that will need to be included in the recreational vehicle to make the first asset compatible.

6. The system of any one of the preceding claims, wherein determining whether the first asset is compatible comprises determining whether adding the first asset to the recreational vehicle will violate a user-defined parameter and in response to determining that adding the first asset to the recreational vehicle will violate the user-defined parameter, providing an option to perform at least one of the following: adjust the user-defined parameter, accept that the first asset will violate the user-defined parameter, or locate a different asset that will not violate the user-defined parameter.

7. The system of any one of the preceding claims, wherein the computing device comprises at least one of the following: a recreational vehicle computing device, a remote computing device, or a mobile device.

8. The system of any one of the preceding claims, wherein the first asset is a water heater and the second asset is an electrical system, wherein altering operation of the recreational vehicle comprises limiting a time that the water heater is powered.

9. A method for recreational vehicle asset management comprising:
registering, by a computing device, a first asset and a second asset;
monitoring, by the computing device, usage of the first asset and the second asset during a trip of predetermined duration;
predicting, by the computing device, based on the usage that the first asset is likely to experience a status change;
determining, by the computing device, a likely time that the first asset is likely to experience the status change;
determining, by the computing device, based on the likely time that the first asset is likely to experience the status change, whether the first asset will likely to experience the status change during the trip; and
in response to determining that the first asset will likely experience the status change during the trip, altering, by the computing device, operation of a recreational vehicle to address the status change.

10. The method of claim 9, wherein addressing the status change comprises automatically adjusting a setting on the first asset to extend a time until the likely status change, and/or wherein the method further comprises determining that the likely status change is caused by an issue with the second asset.

11. The method of any one of claims 9 to 10, wherein registering the first asset comprises determining if the first asset is compatible with the recreational vehicle, and/or wherein the method optionally comprises, in response to determining that the first asset is not compatible, determining a reason why the first asset is not compatible; and determining other assets that will need to be included in the recreational vehicle to make the first asset compatible.

12. The method of any one of claims 9 to 11, wherein determining whether the first asset is compatible comprises determining whether adding the first asset to the recreational vehicle will violate a user-defined parameter and in response to determining that adding the first asset to the recreational vehicle will violate the user-defined parameter, providing an option to perform at least one of the following: adjust the user-defined parameter, accept that the first asset will violate the user-defined parameter, or locate a different asset that will not violate the user-defined parameter.

13. A non-transitory computer-readable storage medium for recreational vehicle asset management that comprises logic that, when executed by a computing device, causes the computing device to perform at least the following:
monitor usage of a first asset and a second asset in a recreational vehicle during a trip of predetermined duration;
predict, based on the usage that the first asset is likely to malfunction;
determine a likely time that the first asset is likely to malfunction;
determine, based on the likely time that the first asset is likely to malfunction whether the first asset will likely malfunction to disrupt the trip; and
in response to determining that the first asset will likely malfunction to disrupt the trip, alter operation of the recreational vehicle to address the malfunction.

14. The non-transitory computer-readable storage medium of claim 13, wherein addressing the malfunction comprises automatically adjusting a setting on the first asset to extend a time until the likely malfunction, and/or wherein the logic optionally further causes the computing device to determine that the likely malfunction is caused by an issue with the second asset.

15. The non-transitory computer-readable storage medium of any one of claims 13 to 14, wherein the logic further causes the computing device to perform the method according to any one of claims 9 to 12.
